# EUROPÄISCHE PATENTANMELDUNG

(11) **EP 2 226 520 A2**
(43) Veröffentlichungstag der Anmeldung: **08.09.2010**
(21) Anmeldenummer: 10000376.3
(22) Anmeldetag: 16.01.2010
(51) Int. Cl.: F16B 37/06

(54) **Stanzmutter**

(30) Priorität: 07.03.2009 DE 102009012243
(71) Anmelder: NEDSCHROEF PLETTENBERG GmbH, 58840 Plettenberg (DE)
(72) Erfinder: Can, Metin, 58300 Wetter (DE); Hirschfeld, Henning, 58840 Plettenberg (DE); Ferreau, Oliver, 44799 Bochum (DE)
(74) Vertreter: Dörner, Kötter & Kollegen

(57) **Zusammenfassung**

Die Erfindung betrifft eine Stanzmutter, umfassend einen Kopf und einen gegenüber dem Kopf zurückversetzten Schaft, wobei der Schaft eine unrunde Mantelfläche aufweist. Auf der Stirnfläche des Schaftes (13) ist ein Schneidring (16) mit scharfer Schneidkante (17) angeordnet, dessen Außendurchmesser kleiner dem Durchmesser des Schaftes (13) ist. Die Erfindung betrifft weiterhin eine Stanzmuttern-Vorrichtung mit einer Stanzmutter und einer Matrize, deren Innendurchmesser größer als der wirksame Außendurchmesser der Stirnfläche des Schaftes und kleiner als der Außendurchmesser des Schaftes ist, wobei die Matrize (3) eine über ihren Querschnitt plane Oberfläche (32) aufweist.

## Beschreibung

Die Erfindung betrifft eine Stanzmutter nach dem Oberbegriff des Patentanspruchs 1. Die Erfindung betrifft weiterhin eine Stanzmutter-Vorrichtung nach dem Oberbegriff des Patentanspruchs 11. Die Erfindung betrifft darüber hinaus eine Stanzmutter-Blech-Verbindung nach dem Oberbegriff des Patentanspruchs 12.

Stanzmuttern der vorgenannten Art sind beispielsweise aus der DE 1 575 187 sowie der DE 36 26 466 bekannt. Dabei wird die Stanzmutter in ein nicht vorgelochtes Blech eingepresst und wirkt dabei als Stanzstempel, der einen Butzen aus dem Blech ausstanzt. Die Gegenkraft wird dabei von einer Matritze aufgebracht, die das Blech auf der der Stanzmutter gegenüberliegenden Seite um den auszustanzenden Butzen herum abstützt.

Um die notwendige drehfeste Fixierung der Stanzmutter im Blech zu erreichen, ist der im Blech steckende Schaftteil der Stanzmutter mit einem unrunden, meist polygonen Außenumfang ausgestattet, währen die Matritze einen runden Durchmesser besitzt, damit keine bestimmte Drehlage der Stanzmutter beim Stanzen und Einpressen eingehalten werden muss.

Stanzmuttern, bei denen während des Einpressvorgangs der Mutter in das Blech ausschließlich das Blech, nicht aber die Mutter selbst verformt wird, sind von den ähnlich gestalteten sogenannten Nietmuttern zu unterscheiden, bei denen während des Einpressvorgangs auch die Mutter, teilweise zusätzlich zum Blech, zumeist im freien Ende des Schaftbereichs verformt wird. Eine der wesentlichen Kenngrößen bei Stanzmuttern ist die Drehmoment-Belastbarkeit, welche die eingepresste Mutter verkraften kann, bevor sie im Blech durchdreht. Dies wird vorzugsweise durch eine Formschlussverbindung zwischen Mutter und Blech durch die polygone Ausgestaltung des Schaftteils der Mutter erreicht, an welche sich durch Fließvorgänge des Bleches beim Einpressen das umgebende Blechmaterial möglichst gut anlegt.

In der Praxis hat sich jedoch herausgestellt - auch unter Berücksichtigung der Tatsache, dass heute in der verarbeiteten Industrie immer härtere und damit sprödere und somit weniger fließfähige Blechsorten eingesetzt werden - dass dieses Fließvermögen begrenzt ist. Insbesondere bei der Verkleinerung einer Stanzmutter bei identischem Innengewindedurchmesser erweist sich die Erzielung des erforderlichen Lösemoments oftmals als kritisch.

Hier will die Erfindung Abhilfe schaffen. Der Erfindung liegt die Aufgabe zu Grunde, eine Stanzmutter-Vorrichtung sowie eine hierfür verwendbare Stanzmutter zu schaffen, deren Lösemoment nach dem Einpressen in ein Blech auch bei kleineren Durchmessern möglichst groß ist. Gemäß der Erfindung wird diese Aufgabe durch die Merkmale der Ansprüche 1, 11 und 12 gelöst.

Mit der Erfindung ist eine Stanzmutter-Vorrichtung sowie eine hierfür verwendbare Stanzmutter geschaffen, deren Lösemoment nach dem Einpressen in ein Blech auch bei kleineren Durchmessern vergrößert ist. Durch das Vorsehen eines Schneidrings mit scharfer Schneidkante ist das Ausstanzen eines definierten Butzens ermöglicht. Undefinierte Ausreißungen, wie sie im Stand der Technik vorkommen, sind so vermieden. Dadurch lässt sich das für den Fließvorgang des Blechs zur Erzielung des erforderlichen Formschlusses verfügbare Blechmaterial exakter bestimmen. Durch die Festlegung des Verhältnisses von Manteldurchmesser zu Schneidringdurchmesser ist diese verfügbare Blechmaterialmenge einstellbar.

In Weiterbildung der Erfindung ist die Mantelfläche des Schaftes als Rändelung oder als Polygon ausgebildet. Dabei hat sich gezeigt, dass insbesondere die Ausbildung der Mantelfläche des Schaftes als Rändelung eine signifikante Erhöhung des Lösemoments ermöglicht.

In Ausgestaltung der Erfindung ist die gerändelte Mantelfläche des Schaftes im Wesentlichen zylindrisch ausgebildet. Hierdurch ist die Fertigung der Mantelfläche vereinfacht.

In alternativer Ausgestaltung der Erfindung ist die Mantelfläche des Schaftes zum Kopf hin sich verjüngend ausgebildet, so dass ein Hinterschnitt gebildet ist. Hierdurch ist das erzielbare Lösemoment erhöht. Das nach dem Stanzvorgang verbleibende Blechmaterial fließt in den Hinterschnitt, wodurch eine zusätzliche Festigkeit der Verbindung erzielt ist.

In Weiterbildung der Erfindung ist die Schulter des Kopfes zum Kopf hin geneigt ausgeführt, so dass ein Hinterschnitt gebildet ist. Hierdurch ist ein zusätzliches Fließen des Blechmaterials in den Kopfbereich ermöglicht, wodurch das erzielbare Lösemoment weiter erhöht werden kann.

Bevorzugt beträgt das Verhältnis von Schneidringaußendurchmesser zum Durchmesser der Mantelfläche (Schaftdurchmesser) zwischen 0,9 und 0,98. In diesem Bereich wurden auch bei kleineren Stanzmutterdurchmessern hohe Lösemomente erzielt.

In Ausgestaltung der Erfindung beträgt das Verhältnis der Höhe der gerändelten Mantelfläche zur Höhe des Schneidrings 2/3.

Bevorzugt sind auf dem Absatz wenigstens zwei radial verlaufende Stege angeformt. An diese Stege legt sich das umgebende Blechmaterial durch Fließvorgänge an, wodurch eine weitere Erhöhung des Lösemoments ermöglicht ist.

In Ausgestaltung der Erfindung ist die Mantelfläche des Kopfes rund ausgeführt. Hierdurch ist eine einfache Fertigung ermöglicht. Insbesondere in Kombination mit einer gerändelten Mantelfläche sind gute Lösemomente erzielbar.

Alternativ kann die Mantelfläche des Kopfes zumindest bereichsweise als Mehrkant, vorzugsweise als Sechskant ausgeführt sein. Diese Mehrkantkontur presst sich beim Stanzvorgang zusätzlich in das Blech ein, wodurch das Lösemoment weiter erhöht ist.

Eine Stanzmutter der vorgenannten Art wird äußerst vorteilhaft mit einer Matritze nach dem Oberbegriff des Patentanspruchs 11 in das Blech eingebracht, wobei die Matritze eine über ihren Querschnitt plane Oberfläche aufweist. Die plane Oberfläche der Matritze bewirkt eine plane Auflagefläche des Blechs mit montierter Stanzmutter.

Die Verbindung zwischen einer der vorgenannten Stanzmuttern und einem Blech ist bevorzugt derart ausgebildet, dass die Schneidkante hinter der der Stanzmutter entgegengesetzten Blechoberfläche zurückliegend angeordnet ist.

Hierdurch ist eine plane Oberfläche ohne jegliche hervorstehende Ränder erzielbar.

Andere Weiterbildungen und Ausgestaltungen der Erfindung sind in den übrigen Unteransprüchen angegeben. Ein Ausführungsbeispiel der Erfindung ist in der Zeichnung dargestellt und wird nachfolgend im Einzelnen beschrieben. Es zeigen:

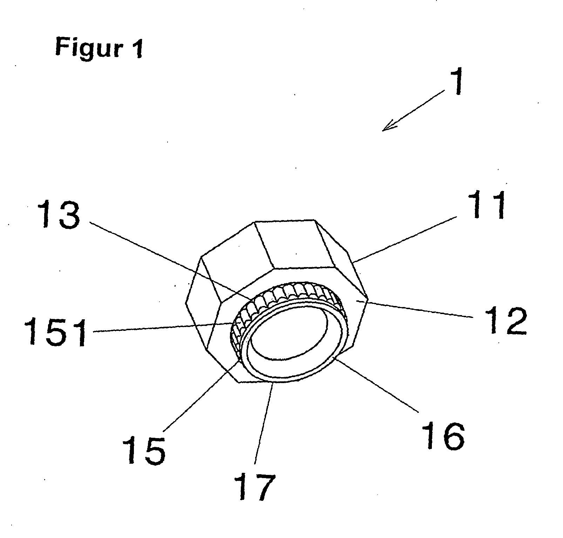

- Fig. 1: die dreidimensionale Darstellung einer Stanzmutter;

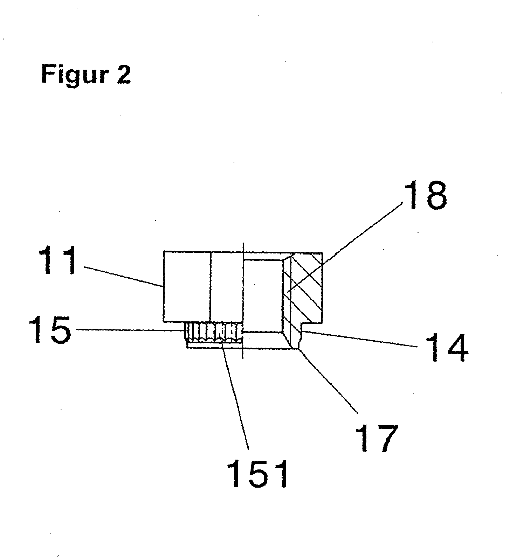

- Fig. 2: die Stanzmutter aus Fig. 1 in Teilschnittdarstellung;

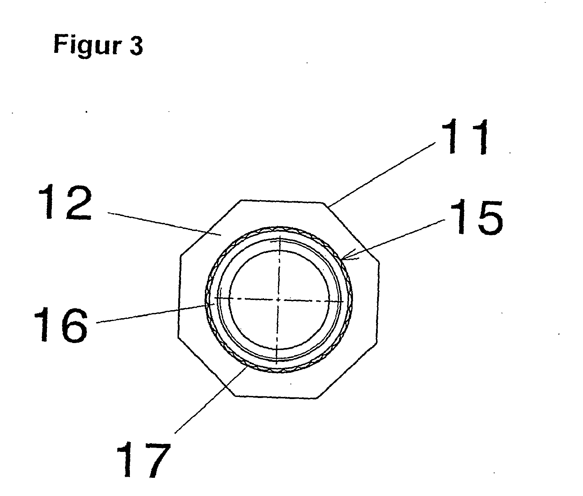

- Fig. 3: die Stanzmutter aus Fig. 1 in der Ansicht von unten;
- Fig. 4: die schematische Darstellung einer Stanzmuttern-Vorrichtung mit auf einem Blech aufliegender Stanzmutter;
- Fig. 5: die Stanzmuttern-Vorrichtung aus Fig. 4 mit eingebrachter Stanzmutter;

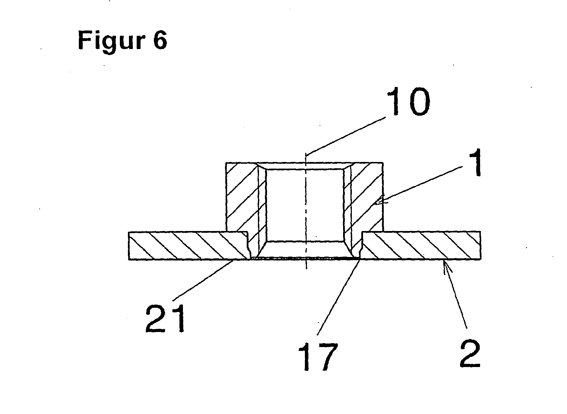

- Fig. 6: ein Blech mit eingebrachter Stanzmutter in Schnittdarstellung und
- Fig. 7: das Blech mit eingebrachter Stanzmutter aus Fig. 6 in dreidimensionaler Darstellung aus einer Perspektive von unten.

Die als Ausführungsbeispiel gewählte Stanzmutter besteht im Wesentlichen aus einem Schaft 13 und einem demgegenüber breiteren Kopf 11, die sich in Axialrichtung aneinander anschließen, vorzugsweise einstückig miteinander ausgebildet sind und - bis auf die polygonen bzw. gerändelten Außenkonturen - rotationssymmetrisch ausgebildet sind.

Kopf 11 und Schaft 13 sind von einer Gewindebohrung 18 durchdrungen, die als Durchgangsbohrung ausgebildet ist. Im Ausführungsbeispiel ist das Innengewinde der Gewindebohrung 18 ein M12-Gewinde. Die Durchgangsbohrung 18 mündet im Anschluss an das Innengewinde am Schaftende in einem Innenkonus, der um 60° nach außen sich aufweitend ausgebildet ist. Kopfseitig mündet die Durchgangsbohrung in einen sich nach außen in einem Winkel von 30° erstreckenden Innenkonus. Alternativ kann die Gewindebohrung 18 auch als Sacklochbohrung ausgebildet sein.

Die Mantelfläche des Schaftes 13 ist über den wesentlichen Teil ihrer Länge mit einer Rändelung 15 versehen, welche parallel zur Axialrichtung 10 der Stanzmutter 1 verlaufende Rändelflächen 151 aufweist. Dabei ist die Rändelung 15 derart ausgebildet, dass die Rändelflächen 151 schräg nach außen zum freien Ende des Schaftes 13 hin abfallen.

An die Rändelung 15 schließt sich ein durchmesserverjüngter Schneidring 16 an, der an seiner der Gewindebohrung 18 zugewandten Seite mit einer Schneidkante 17 versehen ist. Im Ausführungsbeispiel weist der Schneidring 16 einen Außendurchmesser von 14,3 mm auf. Die Schneidkante 17, welche im Ausführungsbeispiel einen Außendurchmesser von 13,1 mm aufweist, begrenzt den Stanzdurchmesser, während die Mantelfläche 14 mit Rändelung 15 den gegenüber der Schneidkante 17 größeren Pressdurchmesser bildet. Der Übergang zwischen Mantelfläche 14 mit Rändelung 15 und Schneidring 16 ist als umlaufende Pressschräge 19 ausgebildet.

Die Rändelflächen 151 laufen im Bereich der Pressschräge 19 zwischen dem durch den Schneidring 16 gebildeten Stanzdurchmesser und dem durch die Rändelung 15 gebildeten Pressdurchmesser aus, wodurch der Pressdurchmesser hinsichtlich des Umfangs der Mantelfläche 14 eine wellenförmige Kontur ergibt; der Stanzdurchmesser weist hingegen eine runde Kontur auf.

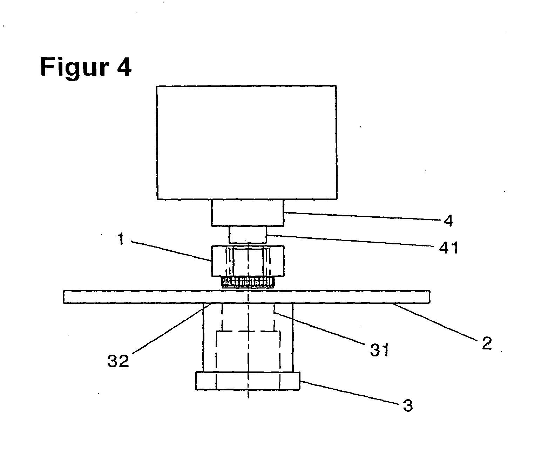

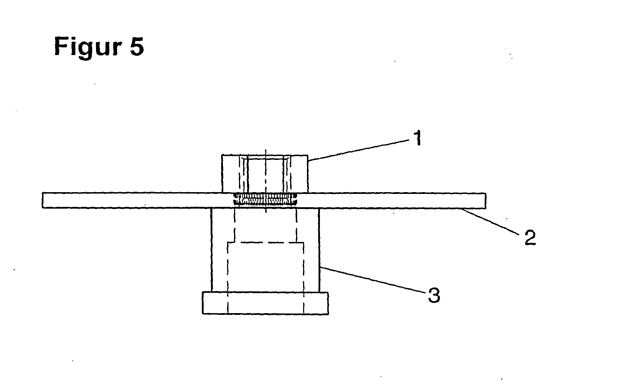

In den Figuren 4 und 5 ist schematisch eine Stanzmuttern-Vorrichtung gezeigt, umfassend eine Matrize 3 zur Auflage eines Blechs 2 und einen Stempel 4, welcher die Stanzmutter 1 aufnimmt und über den die Stanzmutter 1 gegen das Blech 2 pressbar ist. Die Matrize 3 ist weitgehend zylindrisch ausgebildet und mit einer Innenbohrung 31 versehen, deren Innendurchmesser geringfügig größer als der Durchmesser des Schneidrings 16 der Stanzmutter 1 ausgebildet ist. Im Ausführungsbeispiel hat die Innenbohrung 31 einen Durchmesser von 14,4 mm. An ihrer dem Blech 2 zugewandten Oberseite weist die Matrize 3 eine durchgehend plane Oberfläche 32 auf.

Der Stempel 4 ist weitgehend zylinderförmig ausgebildet. An seinem der Stanzmutter 1 zugewandten Ende ist der Stempel 4 mit einer Aufnahme 41 zur Aufnahme einer Stanzmutter 1 versehen. Beim Einpressen der Stanzmutter 1 in das Blech 2 wird der Stempel 4 gegen die Matrize 3 bewegt, wodurch die Schneidkante 17 des Schneidrings 16 gegen die Oberfläche 21 des Blechs 2 gepresst wird. Dabei stanzt der Schneidring 16 einen Butzen aus dem Blech 2 aus, in dem er ihn gegenüber dem Innendurchmesser der Innenbohrung 31 der Matrize 3 abschert. Der so ausgestanzte Butzen kann durch die Innenbohrung 31 herausfallen und weist durch die über die Schneidkante 17 des Schneidrings 16 eingebrachte Kontur eine definierte Geometrie auf. Der in Einpressrichtung weiter hinten liegende durch die Rändelung 15 gebildete Pressdurchmesser vergrößert anschließend die durch den ausgestanzten Butzen gebildete Einpressöffnung des Blechs 2 durch Verdrängen des umgebenden Blechmaterials, erreicht jedoch die Matrize 3 nicht mehr, da zuvor die zwischen Kopf 11 und Schaft 13 gebildete Schulter 12 der Stanzmutter 1 auf dem Blech 2 zur Anlage gebracht wird.

Damit der Butzen zuverlässig aus dem Blech 2 abgetrennt wird, darf die Differenz zwischen dem Stanzdurchmesser und dem Durchmesser der Innenbohrung 31 der Matrize 3 nicht zu groß sein. Damit der Butzen danach zuverlässig durch die Matrize 3 nach unten fallen und entsorgt werden kann, weitet sich der Durchmesser der Innenbohrung 31 der Matrize 3 von der Stirnfläche aus auf.

Im Ausführungsbeispiel weist der Kopf eine achteckige Außenkontur mit einem Schlüsselmaß von 20 mm auf, welche sich beim Stanzvorgang in die Blechoberfläche 21 einpresst, wodurch das Lösemoment erhöht wird. Zusätzlich können an der Schulter 12 umlaufend Stege angeformt sein, die auf diesem Wege in die Blechoberfläche 21 gepresst werden, um das Lösemoment weiter zu erhöhen. In alternativer Ausgestaltung kann der Kopf 11 jedoch auch eine kreisrunde Mantelfläche aufweisen, welche einfacher herstellbar ist. Es hat sich gezeigt, dass allein durch das Einpressen der Rändelung in die Blechoberfläche 21 ein erhebliches Lösemoment bewirkt wird.

Eine weitere Erhöhung des Lösemoments kann dadurch bewirkt werden, dass die mit der Rändelung versehene Mantelfläche in Richtung des Kopfes 11 konisch zulaufend ausgebildet wird. Durch diese - sehr aufwendige - Gestaltung ist ein Hinterschnitt erzielbar, in den beim Pressvorgang das Blechmaterial hineinfließen kann.

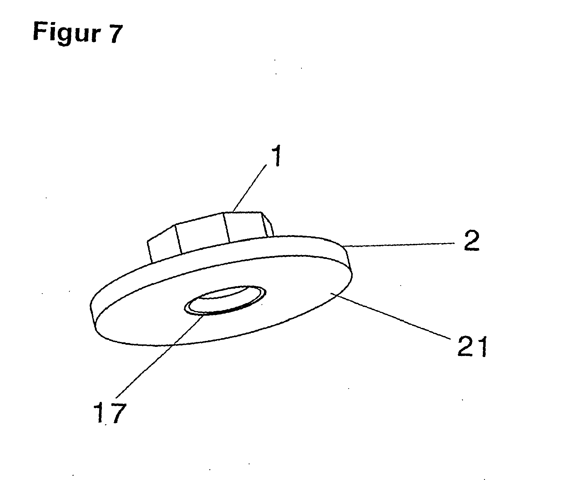

Der Schaft 13 der Stanzmutter 1 mit seinem Schneidring 16 ist vorzugsweise so im Hinblick auf die Dicke des Blechs 21 zu wählen, dass bei eingepresster Stanzmutter 1 die Schneidkante 17 hinter der der Stanzmutter 1 entgegengesetzten Blechoberfläche 21 zurückliegend angeordnet ist, wie in Figur 7 dargestellt. Eine derartige Verbindung ist durch die vorgesehene Schneidkante 17 auch mit einer einfach gestaltete Matrize 3 mit planer Oberfläche 32 ermöglicht, da der Butzen durch den während des Einpressvorgangs bewirkten Fließvorgang des Blechmaterials durch die Schneidkante 17 vollständig durchtrennt wird. Eine konische Auswölbung der Matrize 3 um die Innenbohrung 31 herum, wie sie im Stand der Technik bekannt ist, ist hier nicht erforderlich.

## Patentansprüche

1. Stanzmutter, umfassend einen Kopf und einen gegenüber dem Kopf zurückversetzten Schaft, wobei der Schaft eine unrunde Mantelfläche aufweist, **dadurch gekennzeichnet, dass** auf der Stirnfläche des Schaftes (13) ein Schneidring (16) mit scharfer Schneidkante (17) angeordnet ist, dessen Außendurchmesser kleiner dem Durchmesser des Schaftes (13) ist.

2. Stanzmutter nach Anspruch 1, **dadurch gekennzeichnet, dass** die Mantelfläche (14) des Schaftes (13) als Rändelung oder als Polygon ausgebildet ist.

3. Stanzmutter nach Anspruch 2, **dadurch gekennzeichnet, dass** die gerändelte Mantelfläche (14) des Schaftes (13) im Wesentlichen zylindrisch ausgebildet ist.

4. Stanzmutter nach einem der vorgenannten Ansprüche, **dadurch gekennzeichnet, dass** die Mantelfläche (14) des Schaftes (13) zum Kopf (11) hin sich verjüngend ausgebildet ist, so dass ein Hinterschnitt gebildet ist.

5. Stanzmutter nach einem der vorgenannten Ansprüche, **dadurch gekennzeichnet, dass** die Schulter (12) des Kopfes (11) zum Kopf (11) hin geneigt ausgeführt ist, so dass ein Hinterschnitt gebildet ist.

6. Stanzmutter nach einem der vorgenannten Ansprüche, **dadurch gekennzeichnet, dass** das Verhältnis von Schneidringaußendurchmesser zum Durchmesser der Mantelfläche (14) zwischen 0,9 und 0,98 ist.

7. Stanzmutter nach einem der Ansprüche 2 bis 6, **dadurch gekennzeichnet, dass** das Verhältnis der Höhe der gerändelten Mantelfläche (14) zur Höhe der Schneidkante (17) zweidrittel beträgt.

8. Stanzmutter nach einem der vorgenannten Ansprüche, **dadurch gekennzeichnet, dass** auf der Schulter (12) umlaufend wenigstens zwei Stege angeformt sind.

9. Stanzmutter nach einem der vorgenannten Ansprüche, **dadurch gekennzeichnet, dass** die Mantelfläche des Kopfes (11) rund ausgeführt ist.

10. Stanzmutter nach einem der Ansprüche 1 bis 8, **dadurch gekennzeichnet, dass** die Mantelfläche des Kopfes (1) als Mehrkant, vorzugsweise als Achtkant ausgeführt ist.

11. Stanzmuttern-Vorrichtung mit einer Stanzmutter nach einem der vorgenannten Ansprüche und einer Matrize, deren Innendurchmesser größer als der wirksame Außendurchmesser der Stirnfläche des Schaftes und kleiner als der Außendurchmesser des Schaftes ist, **dadurch gekennzeichnet, dass** die Matrize (3) eine über ihren Querschnitt plane Oberfläche (32) aufweist.

12. Stanzmuttern-Blech-Verbindung, umfassend ein Blech, in das eine Stanzmutter nach einem der Ansprüche 1 bis 11 eingebracht ist, **dadurch gekennzeichnet, dass** die Schneidkante (17) hinter der der Stanzmutter (1) entgegengesetzten Blechoberfläche (32) zurückliegend angeordnet ist.
